# EUROPEAN PATENT APPLICATION

(11) **EP 4 686 587 A1**
(43) Date of publication of application: **04.02.2026**
(21) Application number: 25193043.4
(22) Date of filing: 31.07.2025
(51) Int. Cl.: B60H 1/32, F25B 7/00, B60H 1/00

(54) **METHODS AND SYSTEMS OF USING A HYBRID COOLANT LOOP FOR A TRANSPORT CLIMATE CONTROL SYSTEM**

(30) Priority: 31.07.2024 US 202463677794 P
(71) Applicant: Thermo King LLC, Minneapolis, MN 55420 (US)
(72) Inventor: SCHMIG, Alexander, Minneapolis, Minnesota, 55420 (US); KUJAK, Stephen A, Minneapolis, Minnesota, 55420 (US); PETERSEN, Michael, Minneapolis, Minnesota, 55420 (US)
(74) Representative: Haseltine Lake Kempner LLP

(57) **Abstract**

A transport climate control system (400) and method for providing a first temperature for cooling a first conditioned space (420A) and a second temperature for cooling a second conditioned space (420B). The transport climate control system (400) including a first climate control system (401) including a first compressor (406), a first condenser (407), a first expansion device (409), and a primary heat exchanger (408) that is configured to thermally communicate with a coolant loop (430), a secondary climate control system (410) including a second compressor (411), a cascaded heat exchanger (412), a second expansion device (413), and an evaporator (414); and the coolant loop (430) having a coolant. The coolant loop (430) is configured to thermally communicate with the primary heat exchanger (408), and the coolant loop (430) is further configured to thermally communicate with one or more of the cascaded heat exchanger (412) and the second conditioned space (420B).

## Description

### FIELD

This disclosure relates generally to a transport climate control system. More specifically, this disclosure relates to transport climate control systems having a hybrid coolant loop that can be used for providing various heating and/or cooling functionalities for a transport unit.

### BACKGROUND

A transport climate control system can include, for example, a transport refrigeration system (TRS) and/or a heating, ventilation and air conditioning (HVAC) system. A TRS is generally used to control an environmental condition (e.g., temperature, humidity, air quality, and the like) within an internal space or cargo space of a transport unit (e.g., a truck, a container (such as a container on a flat car, an intermodal container, a marine container etc.), a trailer, a box car, a semi-tractor, a bus, or other similar transport unit). The TRS can maintain environmental condition(s) of the internal space to maintain cargo (e.g., produce, frozen foods, pharmaceuticals, vaccines, etc.). In some embodiments, the transport unit can include a HVAC system to control a climate within a passenger space of a transport unit or a vehicle.

### SUMMARY

The embodiments described herein are directed to transport climate control systems having a hybrid coolant loop that can be used for providing various heating and/or cooling functionalities for a transport unit.

The embodiments described herein can be used in a mechanically powered (e.g., prime mover powered), electrically powered (e.g., battery powered), or a hybrid powered (e.g., combination of mechanically and electrically powered) transport unit(s) having a transport climate control system.

In one example embodiment, a transport climate control system that is configured to provide a first temperature for cooling a first conditioned space and a second temperature for cooling a second conditioned space is provided. The transport climate control system includes a first climate control system including a first compressor, a first condenser, a first expansion device, and a primary heat exchanger that is configured to thermally communicate with a coolant loop, the secondary climate control system including a second compressor, a cascaded heat exchanger, a second expansion device, and an evaporator; and a coolant loop having a coolant. The coolant loop is configured to thermally communicate with the primary heat exchanger, and wherein the coolant loop is further configured to thermally communicate with one or more of the cascaded heat exchanger and the second conditioned space.

In another example embodiment, a method of providing a first conditioned space at a first temperature and providing a second conditioned space at a second temperature for a transport climate control system is provided. The method includes cooling the first conditioned space to the first temperature using a second climate control system that includes a second compressor, a cascaded heat exchanger, a second expansion device, and an evaporator; circulating a coolant through a hybrid coolant loop that is in thermal communication with at least a primary heat exchanger, the cascaded heat exchanger, and the second conditioned space; cooling the coolant circulating through the hybrid coolant loop using a first climate control system including a first compressor, a first condenser, a first expansion device, and the primary heat exchanger that is configured to thermally communicate with the hybrid coolant loop; and controlling a flow of the coolant to one or more of the cascaded heat exchanger or the second conditioned space, wherein the second conditioned space is cooled to the second temperature via thermal communication of the coolant and the second conditioned space.

### BRIEF DESCRIPTION OF THE DRAWINGS

References are made to the accompanying drawings that form a part of this disclosure, and which illustrate embodiments in which the systems and methods described in this Specification can be practiced.
FIG. 1A is a side view of a van with a transport climate control system, according to an embodiment.
FIG. 1B is a side view of a truck with a transport climate control system, according to an embodiment.
FIG. 1C is a perspective view of a climate-controlled transport unit, according to an embodiment.
FIG. 1D is a side view of a climate-controlled transport unit including a multi-zone transport climate control system, according to an embodiment.
FIG. 1E is a perspective view of a climate-controlled transport unit, according to an embodiment.
FIG. 2 is a schematic diagram of a transport climate control system that includes a primary climate control system in thermal communication with a secondary climate control system, according to an embodiment.
FIG. 3 is a schematic diagram of a primary climate control system, according to an embodiment.
FIG. 4 is a schematic flow chart of a method for providing a first conditioned space and a second conditioned space, according to an embodiment.

Like reference numbers represent like parts throughout.

### DETAILED DESCRIPTION

This disclosure relates generally to a transport climate control system. More specifically, this disclosure relates to transport climate control systems having a hybrid coolant loop.

The hybrid coolant loop can be used for providing various heating and/or cooling functionalities for a transport unit, such as, heating or cooling one or more components in the transport unit, such as, batteries, on-board electronics, or auxiliary equipment; conditioning a second conditioned space at a second temperature, e.g., medium temperature refrigeration; and/or being used in a cascade refrigeration cycle for providing the thermal transfer with the working fluid in a cascade climate control system that provides conditioning for a first conditioned space at a first temperature, e.g., low temperature refrigeration.

As used herein, a transport unit can include, for example, a truck, a van, a container (such as a container on a flat car, an intermodal container, a marine container, etc.), a box car, a semi-tractor, or other similar transport unit. The transport unit can be a climate-controlled transport unit (e.g., a transport unit including a transport climate control system) that can be used to transport perishable items such as, but not limited to, produce, frozen foods, pharmaceuticals, biological samples, and meat products. The transport unit can be mechanically powered (e.g., prime mover powered), electrically powered (e.g., battery powered), or hybrid powered (e.g., combination of mechanically and electrically powered).

As used herein, the transport climate control system is generally used to control one or more environmental conditions such as, but not limited to, temperature, humidity, and/or air quality within a climate-controlled space, e.g., a conditioned space, of a transport unit. The transport climate control system can include a climate control unit (CCU) attached to the transport unit to control one or more environmental conditions (e.g., temperature, humidity, air quality, etc.) of the climate-controlled space. The CCU can include one or more components of a vapor-compression type climate control system that includes, for example, a compressor, a condenser, an expansion valve, an evaporator, and one or more fans or blowers to control the heat exchange between the air within the climate-controlled space and/or the ambient air outside of the transport unit. The transport climate control system can be used in a mechanically powered (e.g., prime mover powered), electrically powered (e.g., battery powered), or hybrid powered (e.g., combination of mechanically and electrically powered) transport unit. For example, in some embodiments, the transport climate control system can be used in an electrically powered or hybrid powered transport unit, such as, a trailer or cargo van.

The transport climate control systems can use various working fluids for providing refrigeration for the climate-controlled space of the transport unit. The working fluid, e.g., refrigerant, used in the transport climate control system can have various levels of toxicity and/or flammability, for example, as outlined in ASHRAE Standard 34 (2022). In some embodiments, as described herein, the transport climate control systems are configured such that refrigerants that have higher levels of toxicity and/or flammability are used in a climate control system that is located externally of any enclosed space(s) of the transport unit, e.g., located outside of any enclosed space of the transport unit and/or provided in an external environment with respect to any enclosed space(s) of the transport unit, whereas, refrigerants that have low (or medium) or no toxicity and/or flammability can be used in conditioned space(s), e.g., climate-controlled space(s), within the transport unit and still provide low temperature refrigeration. The transport climate control system includes a hybrid coolant loop that is configured to transfer thermal load from one or more thermal sources in the transport unit using a coolant circulated in the hybrid coolant loop. In some embodiments, the hybrid coolant loop is configured to transfer the thermal load between the climate control system located external to any enclosed space of the transport unit ("external climate control system") and the climate control system located within ("internal climate control system") any enclosed space(s) of the transport unit, e.g., climate-controlled or conditioned space(s). In some embodiments, the hybrid coolant loop is also configured to transfer the thermal load between the external climate control system and one or more thermal sources in the transport unit, such as, one or more components of the transport unit, such as, batteries, on-board electronics, and/or auxiliary equipment in the electrified transport unit, and medium temperature conditioned space(s) of the climate-controlled space, e.g., for fresh produce temperature refrigeration. In view of such structure, refrigerants that have higher toxicity and/or flammability, such as, certain low global warming potential flammable refrigerants or hydrocarbon refrigerants, may not be used in enclosed space(s) of the transport unit, but rather are used externally to provide the refrigeration and/or lift for low temperature refrigeration.

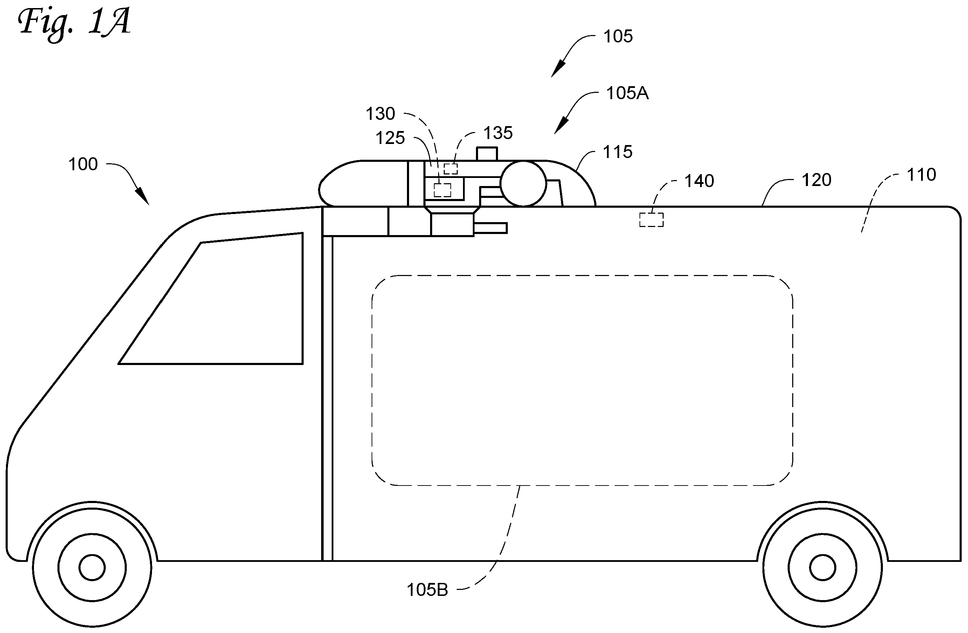

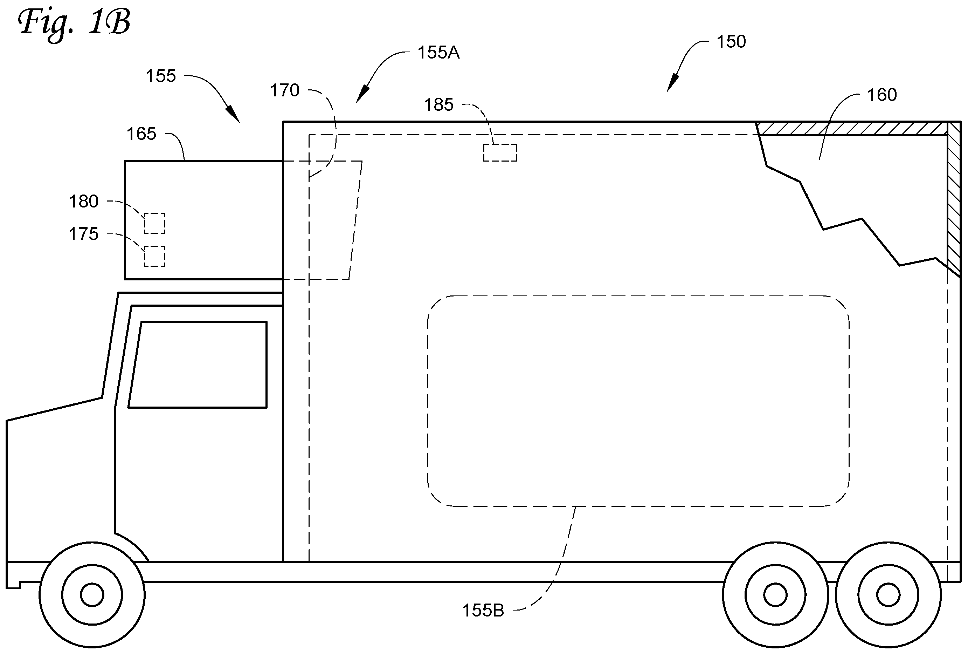

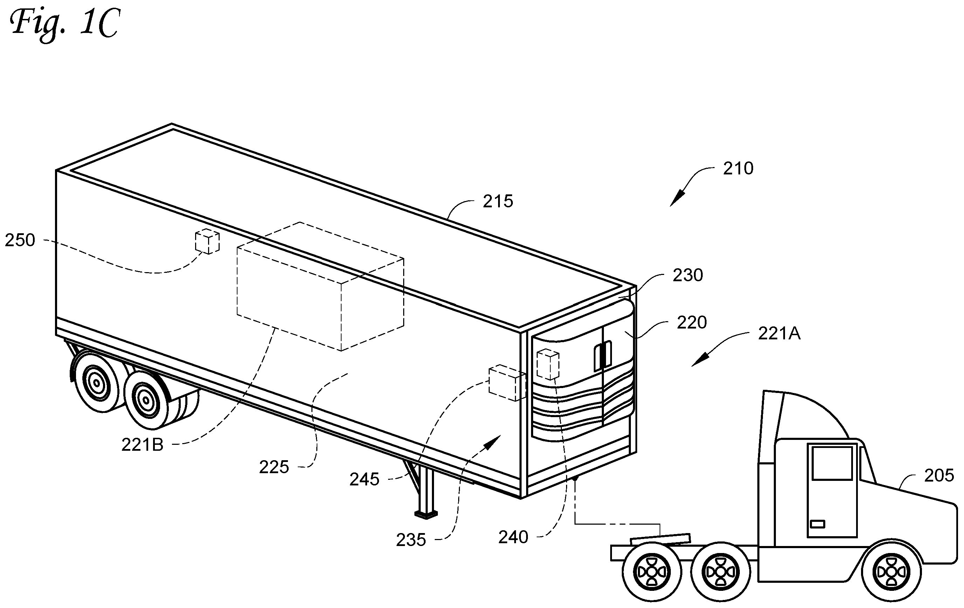

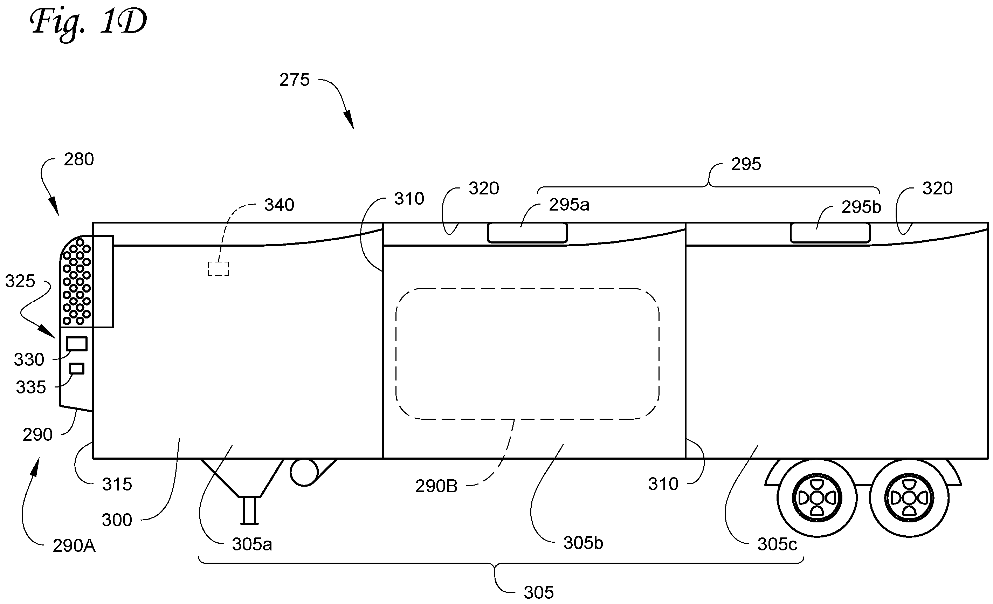

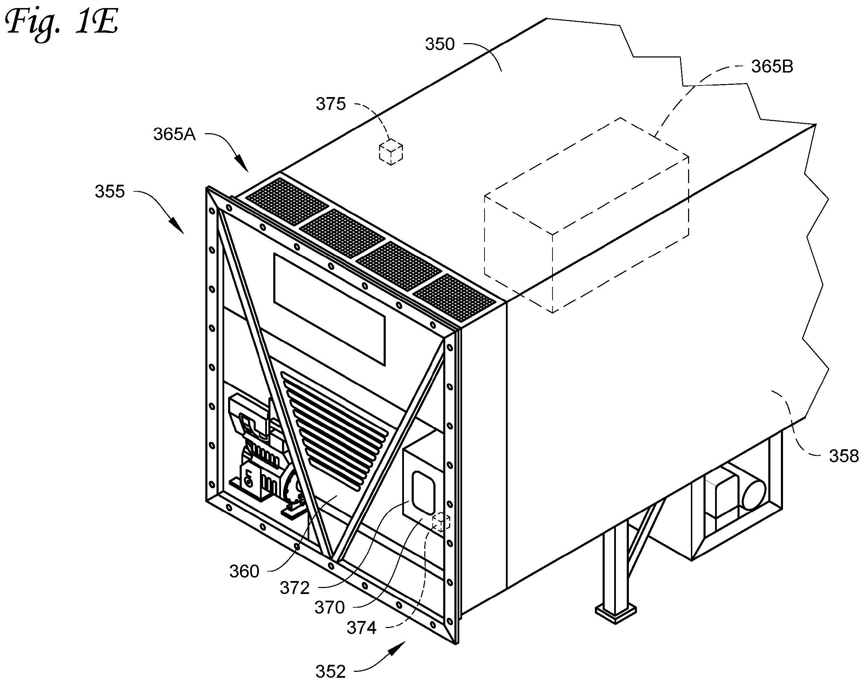

FIGS. 1A - 1E show transport unit(s) having a transport climate control system according to various embodiments. FIG. 1A is a side view of a van 100 with a transport climate control system 105, according to an embodiment. FIG. 1B is a side view of a truck 150 with a transport climate control system 155, according to an embodiment. FIG. 1C is a perspective view of a climate-controlled trailer 215 attachable to a tractor 205, according to an embodiment. The climate-controlled trailer 215 includes a transport climate control system 210. FIG. 1D is a side view of a climate-controlled trailer or transport unit 275 including a multi-zone transport climate control system 280, according to an embodiment. FIG. 1E is a perspective view of an intermodal container 350 with a transport climate control system 355.

FIG. 1A illustrates the van 100 having the transport climate control system 105 for providing climate control within a climate-controlled space 110, e.g., for carrying cargo. The transport climate control system 105 includes a climate control unit (CCU) 115 that is mounted to a rooftop 120 of the van 100. In an embodiment, the CCU 115 can be a transport refrigeration unit.

The transport climate control system 105 can include, among other components, a primary climate control system 105A and a secondary climate control system 105B that are in thermal communication with the climate-controlled space 110. In some embodiments, the primary climate control system 105A is only in thermal communication to the climate-controlled space 110 via a hybrid coolant loop. The climate-controlled space 110 can include two or more conditioned spaces, e.g., having different cooling requirements, for example, at a first temperature and second temperature. In some embodiments, the two or more conditioned spaces can include one or more of a low temperature conditioned space, e.g., freezer section having a frozen or deep freeze temperature between at or about 0 degrees Celsius to -70 degrees Celsius, and preferably to -50 degrees Celsius, a medium temperature conditioned space, e.g., fresh produce section having a temperature between at or about 1 degrees Celsius to 5 degrees Celsius, or other similarly conditioned space(s), e.g., at a temperature between at or about -5 degrees Celsius to 10 degrees Celsius or any ranges between -70 degrees Celsius and 10 degrees Celsius. In some embodiments, the climate-controlled space 110 can include a passenger compartment of the van, e.g., at a temperature between at or about 15 degrees Celsius to 30 degrees Celsius.

The primary climate control system 105A is configured to provide the high temperature side cooling for a cascaded refrigeration cycle arrangement and/or for providing at least a portion of the cooling for one or more thermal loads, such as, component(s) of the van and/or one or more of the conditioned spaces. The primary climate control system 105A includes a climate control circuit that connects, for example, a compressor, a condenser, an evaporator, and an expansion device, in which one or more components are located externally of any enclosed space(s) of the van 100, e.g., in the ambient atmosphere or external environment, to provide cooling to one or more thermal loads. As defined herein, an expander can be an expansion valve or any other type of expansion device that is configured to control an amount of working fluid passing there through and thereby regulate the superheat of vapor leaving an evaporator. In some embodiments, all, some, or partial part(s) of the components of the primary climate control system 105A including, for example, the compressor, the condenser, the evaporator (or partial part thereof), and the expansion device, are located within the CCU 115 and exposed to the external environment. In some embodiments, the CCU 115 can be a cassette-type refrigeration system that is modular for installation and/or replacement.

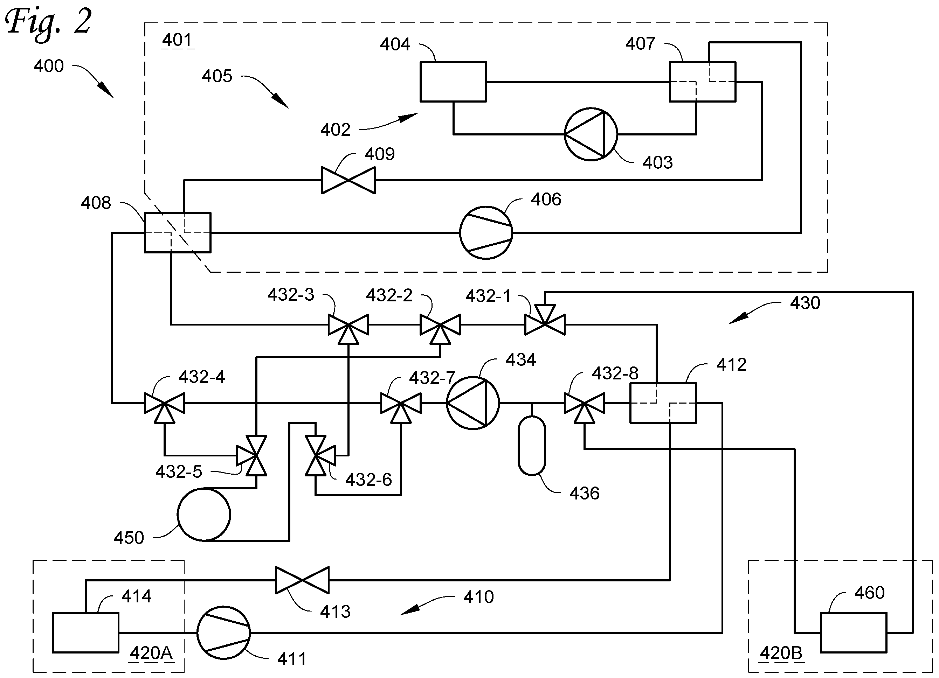

The secondary climate control system 105B is provided within the climate-controlled space 110 and is provided for the low temperature cooling side of the cascaded refrigeration cycle arrangement to provide cooling for the low temperature climate-controlled space, e.g., conditioned space 110, e.g., at or about 0 to -70 degrees Celsius, and preferably -50 degrees Celsius. The secondary climate control system 105B also includes a climate control circuit that connects, for example, a compressor, a condenser, an evaporator, and an expansion device. The secondary climate control system 105B can be in a cascaded refrigeration cycle arrangement with the primary climate control system 105A, e.g., to split the compressor and temperature lift, in which a hybrid coolant loop is in thermal communication with the evaporator of the primary climate control system 105A, e.g., which acts as the primary heat exchanger, and the condenser of the secondary climate control system 105B, which acts as a cascaded heat exchanger with the primary heat exchanger to cool the working fluid of the secondary climate control system 105B (for example, as illustrated in FIGS. 2-3).

In any of the embodiments, as disclosed herein, the primary climate control system 105A can use a working fluid, such as a refrigerant, that has higher levels of toxicity and/or flammability, such as, a hydrocarbon based refrigerant, e.g., propane, isobutane, propylene, blends thereof, or the like; chlorinated and/or fluorinated based refrigerant, e.g., a low global warming potential refrigerant. The secondary climate control system 105B can use a working fluid, such as a refrigerant, that has no or low (or medium) levels of toxicity and/or flammability, such as, carbon dioxide, or lower toxicity refrigerants, such as, A2L or A1, such as, R-1233zd, R-1234yf, R-1234ze(E), R125, R13, R134a, R-22, R23, R32, R-404A, R407A/B/C/D/E/F/G/H/I, 410A, R-448A, R-449A, R-450A, R452A, R-454A/B/C/D, R-455A, R-507A, R-508A, R-508B, R-513A, R-514A, R515A, R515B, R744, R1132(E), R152a or LFR5A, etc. or any blend thereof, as well as coolants such as, ethylene glycol, propylene glycol, water, a brine solution or combination thereof. As such, the primary climate control system 105A that uses refrigerants with higher levels of toxicity and/or flammability is located externally of any enclosed space, e.g., in the external environment, while refrigerants with no or low levels of toxicity and/or flammability is used in any enclosed space such that low temperature refrigeration is provided for one or more of the climate-controlled spaces (or conditioned space(s)) for the van.

The hybrid coolant loop is in thermal communication with the evaporator of the primary climate control system 105A and is configured to transfer thermal load from one or more thermal sources in the van using a coolant circulated in the hybrid coolant loop. The thermal sources include, but are not limited to, one or more components of the van, such as, batteries in the electrified van, medium temperature conditioned space(s), and the condenser of the secondary climate control system 105B, which is provided in the cascaded refrigeration cycle arrangement with the primary climate control system 105A. The coolant can be any coolant used in refrigeration, such as, ethylene glycol, propylene glycol, water, a brine solution, etc.

In some embodiments, the hybrid coolant loop includes a cold side, e.g., coolant loop supply from the evaporator of the primary climate control system 105A, and a hot side that is a coolant loop return to the evaporator of the primary climate control system 105A, e.g., the coolant after thermal transfer with the thermal sources, such as, the condenser of the secondary climate control system 105B, the one or more components of the van, such as, the batteries, on-board electronics, auxiliary equipment, passenger HVAC systems, or the like, or the medium temperature (or second) conditioned space, e.g., for fresh produce, at a second temperature, e.g., between at or about 1 and 5 degrees Celsius. In some embodiments, the coolant loop return can be used for heat recovery for heating one or more components of the van, such as, the batteries, water lines, auxiliary equipment, HVAC system(s), or the like.

The transport climate control system 105 also includes a programmable climate controller 125 and one or more climate control sensors (not shown) that are configured to measure one or more parameters of the transport climate control system 105 (e.g., an ambient temperature outside of the van 100, an ambient humidity outside of the van 100, a compressor suction pressure, a compressor discharge pressure, a supply air temperature of air supplied by the CCU 115 into the climate-controlled space 110, a return air temperature of air returned from the climate-controlled space 110 back to the CCU 115, a humidity within the climate-controlled space 110, etc.) and communicate the measured parameters to the climate controller 125. The one or more climate control sensors can be positioned at various locations outside the van 100 and/or inside the van 100 (including one or more of the conditioned spaces within the climate-controlled space 110).

The climate controller 125 is configured to control operation of the transport climate control system 105 including one or more components of the primary climate control system 105A, the secondary climate control system 105B, and/or flow of the coolant in the coolant loop. The climate controller 125 can include a single integrated control unit 130 or can include a distributed network of climate controller elements 130, 135. The number of distributed control elements in a given network can depend upon the particular application of the principles of this disclosure. The measured parameters obtained by the one or more climate control sensors can be used by the climate controller 125 to control operation of the transport climate control system 105.

The van 100 includes a sensor 140. In the illustrated embodiment, the sensor 140 is represented as a single sensor. It will be appreciated that in other embodiments, the van 100 can include a plurality of sensors 140 provided in one or more of the conditioned spaces of the climate-controlled space 110. In some embodiments, the sensor 140 can monitor one or more climate control parameters (e.g., temperature, humidity, atmosphere, etc.) within the one or more of the conditioned spaces within the climate-controlled space 110 or just outside the van 100. The sensor 140 can be used by the climate controller 125 to control operation of the transport climate control system 105. The sensor 140 can be in electronic communication with a power source (not shown) of the CCU 115. In an embodiment, the sensor 140 can be in electronic communication with the climate controller 125. It will be appreciated that the electronic communication between the sensor 140 and the climate controller 125 can enable network communication of the sensed climate control parameters measured by the sensor 140. The electronic communication between the climate controller 125 and the sensor 140 can enable the sensed climate control parameters to be utilized in a control of the CCU 115.

FIG. 1B is an illustrative embodiment of the climate-controlled straight truck 150 that includes the transport climate control system 155 for providing climate control within a climate-controlled space 160, e.g., for carrying cargo. The transport climate control system 155 includes a CCU 165 that is mounted to a front wall 170 of the climate-controlled space 160. In an embodiment, the CCU 165 can be a transport refrigeration unit.

The transport climate control system 155 can include, among other components, a primary climate control system 155A and a secondary climate control system 155B that are in thermal communication with the climate-controlled space 160. In some embodiments, the primary climate control system 155A is only in thermal communication to the climate-controlled space 160 via a hybrid coolant loop. The climate-controlled space 160 can include two or more conditioned spaces, e.g., having different cooling requirements, for example, at a first temperature and second temperature. In some embodiments, the two or more conditioned spaces can include one or more of a low temperature conditioned space, e.g., freezer section having a frozen or deep freeze temperature between at or about 0 degrees Celsius to -70 degrees Celsius, a medium temperature conditioned space, e.g., fresh produce section having a temperature between at or about 1 degrees Celsius to 5 degrees Celsius, or other similarly conditioned space(s), e.g., at a temperature between at or about -5 degrees Celsius to 10 degrees Celsius or any ranges between -70 degrees Celsius and 10 degrees Celsius, and preferably between -50 degrees Celsius and 10 degrees Celsius. In some embodiments, the climate-controlled space 160 can include a passenger compartment of the truck 150, e.g., at a temperature between at or about 15 degrees Celsius to 30 degrees Celsius.

The primary climate control system 155A is configured to provide the high temperature side cooling for a cascaded refrigeration cycle arrangement and/or for providing at least a portion of the cooling for one or more thermal loads, such as, component(s) of the truck 150 and/or one or more of the conditioned spaces. The primary climate control system 155A includes a climate control circuit that connects, for example, a compressor, a condenser, an evaporator, and an expansion device, in which one or more components are located externally of any enclosed space(s) of the climate-controlled straight truck 150, e.g., in the ambient atmosphere or external environment, to provide cooling for the one or more thermal loads. In some embodiments, all, some, or partial part(s) of the components of the primary climate control system 155A including, for example, the compressor, the condenser, the evaporator (or partial part thereof), and the expansion device, are located within the CCU 165 and exposed to the external environment. In some embodiments, the CCU 165 can be a cassette-type refrigeration system that is modular for installation and/or replacement.

The secondary climate control system 155B is provided within the climate-controlled space 160 and is configured to provide low temperature cooling side of the cascaded refrigeration cycle arrangement to provide cooling for the low temperature climate-controlled space, e.g., conditions space, e.g., at or about 0 to -70 degrees Celsius, and preferably to -50 degrees Celsius, for one or more of the conditioned spaces. The secondary climate control system 155B also includes a climate control circuit that connects, for example, a compressor, a condenser, an evaporator, and an expansion device. The secondary climate control system 155B can be in a cascaded refrigeration cycle arrangement with the primary climate control system 155A, e.g., to split the compressor and temperature lift, in which a hybrid coolant loop is in thermal communication with the evaporator of the primary climate control system 155A, e.g., which acts as the primary heat exchanger, and the condenser of the secondary climate control system 155B, which acts as a cascaded heat exchanger with the primary heat exchanger to cool the working fluid of the secondary climate control system 155B (for example, as illustrated in FIGS. 2-3).

The hybrid coolant loop is in thermal communication with the evaporator of the primary climate control system 155A and is configured to transfer thermal load from one or more thermal sources in the truck 150 using a coolant circulated in the hybrid coolant loop. The thermal sources include, but not limited to, one or more components of the truck 150, such as, batteries in the electrified truck, medium temperature conditioned space(s) 160, and the condenser of the secondary climate control system 155B, which is provided in the cascaded refrigeration cycle arrangement with the primary climate control system 155A. The coolant can be any coolant used in refrigeration, such as, ethylene glycol, propylene glycol, water, a brine solution, etc.

In some embodiments, the hybrid coolant loop includes a cold side, e.g., coolant loop supply from the evaporator of the primary climate control system 155A, and a hot side that is a coolant loop return to the evaporator of the primary climate control system 155A, e.g., the coolant after thermal transfer with the thermal sources, such as, the condenser of the secondary climate control system 155B, the one or more components of the truck, such as, the batteries, on-board electronics, auxiliary equipment, passenger HVAC systems, or the like, or the medium temperature (or second) conditioned space, e.g., for fresh produce, at a second temperature, e.g., between at or about 1 and 5 degrees Celsius. In some embodiments, the coolant loop return can be used for heat recovery for heating one or more components of the truck 150, such as, the batteries, water lines, auxiliary equipment, HVAC system(s), or the like.

The transport climate control system 155 also includes a programmable climate controller 175 and one or more climate control sensors (not shown) that are configured to measure one or more parameters of the transport climate control system 155 (e.g., an ambient temperature outside of the truck 150, an ambient humidity outside of the truck 150, a compressor suction pressure, a compressor discharge pressure, a supply air temperature of air supplied by the CCU 165 into the climate-controlled space 160, a return air temperature of air returned from the climate-controlled space 160 back to the CCU 165, a humidity within the climate-controlled space 160, etc.) and communicate climate control data to the climate controller 175. The one or more climate control sensors can be positioned at various locations outside the truck 150 and/or inside the truck 150 (including within the climate-controlled space 160).

The climate controller 175 is configured to control operation of the transport climate control system 155 including components one or more components of the primary climate control system 155A, the secondary climate control system 155B, and/or flow of the coolant in the coolant loop. The climate controller 175 can include a single integrated control unit 175 or can include a distributed network of climate controller elements 175, 180. The number of distributed control elements in a given network can depend upon the particular application of the principles described herein. The measured parameters obtained by the one or more climate control sensors can be used by the climate controller 175 to control operation of the transport climate control system 155.

The truck 150 includes a sensor 185. In the illustrated embodiment, the sensor 185 is represented as a single sensor. It will be appreciated that in other embodiments, the truck 150 includes a plurality of sensors 185 provided in one or more of the conditioned spaces of the climate-controlled space 110. In some embodiments, the sensor 185 can monitor one or more climate control parameters (e.g., temperature, humidity, atmosphere, etc.) within the one or more of the conditioned spaces within the climate-controlled space 160 or just outside the truck 150. The sensor 185 can be used by the climate controller 175 to control operation of the transport climate control system 155. The sensor 185 can be in electronic communication with a power source (not shown) of the CCU 165. In an embodiment, the sensor 185 can be in electronic communication with the climate controller 175. It will be appreciated that the electronic communication between the sensor 185 and the climate controller 175 can enable network communication of the sensed climate control parameters measured by the sensor 185. The electronic communication between the climate controller 175 and the sensor 185 can enable the sensed climate control parameters to be utilized in a control of the CCU 165.

FIG. 1C is an illustrative embodiment of the trailer (or transport unit) 215 that includes a transport climate control system 210 for providing climate control within the climate-controlled space 225. The transport climate control system 210 can include a CCU 220 that is mounted to a front wall 230 of the climate-controlled space 225. In an embodiment, the CCU 220 can be a transport refrigeration unit. In other embodiments, it will be appreciated that the CCU 220 can be disposed, for example, on a rooftop or another wall of the trailer 215. In some embodiments, the trailer 215 can be attached to a tractor 205, in which the tractor 205 is attached to and is configured to tow the trailer 215.

The transport climate control system 210 can include, among other components, a primary climate control system 221A and a secondary climate control system 221B that are in thermal communication with the climate-controlled space 225. In some embodiments, the primary climate control system 221A is only in thermal communication to the climate-controlled space 225 via a hybrid coolant loop. The climate-controlled space 225 can include two or more conditioned spaces, e.g., having different cooling requirements, for example, at a first temperature and second temperature. In some embodiments, the two or more conditioned spaces can include one or more of a low temperature conditioned space, e.g., freezer section having a frozen or deep freezer a temperature between at or about 0 degrees Celsius to -70 degrees Celsius, a medium temperature conditioned space, e.g., fresh produce section having a temperature between at or about 1 degrees Celsius to 5 degrees Celsius, or other similarly conditioned space(s), e.g., at a temperature between at or about -5 degrees Celsius to 10 degrees Celsius or any ranges between -70 degrees Celsius and 10 degrees Celsius.

The primary climate control system 221A is configured to provide the high temperature side cooling for a cascaded refrigeration cycle arrangement and/or for providing at least a portion of the cooling for one or more thermal loads, such as, component(s) of the trailer and/or one or more of the conditioned spaces. The primary climate control system 221A includes a climate control circuit that connects, for example, a compressor, a condenser, an evaporator, and an expansion device, in which one or more components are located externally of any enclosed space(s) of the trailer 215, e.g., in the ambient atmosphere or external environment, to provide cooling to one or more thermal loads. In some embodiments, all, some, or partial part(s) of the components of the primary climate control system 221A including, for example, the compressor, the condenser, the evaporator (or partial part thereof), and the expansion device, can be located within the CCU 220 and exposed to the external environment. In some embodiments, the CCU 220 can be a cassette-type refrigeration system that is modular for installation and/or replacement.

The secondary climate control system 221B is provided within the climate-controlled space 225 and is provided for the low temperature cooling side of the cascaded refrigeration cycle arrangement to provide cooling for the low temperature climate-controlled space, e.g., conditioned space, e.g., at or about 0 to -70 degrees Celsius, and preferably at or about 0 to -50 degrees Celsius. The secondary climate control system 221B also includes a climate control circuit that connects, for example, a compressor, a condenser, an evaporator, and an expansion device. The secondary climate control system 221B can be in a cascaded refrigeration cycle arrangement with the primary climate control system 221A, e.g., to split the compressor and temperature lift, in which a hybrid coolant loop is in thermal communication with the evaporator of the primary climate control system 221A, e.g., which acts as the primary heat exchanger, and the condenser of the secondary climate control system 221B, which acts as a cascaded heat exchanger with the primary heat exchanger to cool the working fluid of the secondary climate control system 221B (for example, as illustrated in FIGS. 2-3).

The hybrid coolant loop is in thermal communication with the evaporator of the primary climate control system 221A and is configured to transfer thermal load from one or more thermal sources in the trailer 215 using a coolant circulated in the hybrid coolant loop. The thermal sources include, but not limited to, one or more components of the trailer, such as, batteries in the electrified trailer, medium temperature conditioned space(s), and the condenser of the secondary climate control system 221B, which is provided in the cascaded refrigeration cycle arrangement with the primary climate control system 221A. The coolant can be any coolant used in refrigeration, such as, ethylene glycol, propylene glycol, water, a brine solution, etc..

In some embodiments, the hybrid coolant loop includes a cold side, e.g., coolant loop supply from the evaporator of the primary climate control system 221A, and a hot side that is a coolant loop return to the evaporator of the primary climate control system 221A, e.g., the coolant after thermal transfer with the thermal sources, such as, the condenser of the secondary climate control system 221B, the one or more components of the trailer, such as, the batteries, on-board electronics, auxiliary equipment, or the like, or the medium temperature (or second) conditioned space, e.g., for fresh produce, at a second temperature, e.g., between at or about 1 and 5 degrees Celsius. In some embodiments, the coolant loop return can be used for heat recovery for heating one or more components of the trailer, such as, the batteries, water lines, auxiliary equipment, HVAC system(s), or the like.

The transport climate control system 210 also includes a programmable climate controller 235 and one or more sensors (not shown) that are configured to measure one or more parameters of the transport climate control system 210 (e.g., an ambient temperature outside of the trailer 215, an ambient humidity outside of the trailer 215, a compressor suction pressure, a compressor discharge pressure, a supply air temperature of air supplied by the CCU 220 into the climate-controlled space 225, a return air temperature of air returned from the climate-controlled space 225 back to the CCU 220, a humidity within the climate-controlled space 225, etc.) and communicate climate control data to the climate controller 235. The one or more climate control sensors can be positioned at various locations outside the trailer 215 and/or inside the trailer 215 (including within the climate-controlled space 225).

The climate controller 235 is configured to control operation of the transport climate control system 210 including one or more components of the primary climate control system 221A, the secondary climate control system 221A, and/or flow of the coolant in the coolant loop. The climate controller 235 can include a single integrated control unit 240 or can include a distributed network of climate controller elements 240, 245. The number of distributed control elements in a given network can depend upon the particular application of the principles described herein. The measured parameters obtained by the one or more climate control sensors can be used by the climate controller 235 to control operation of the transport climate control system 210.

The trailer 215 includes a sensor 250. In the illustrated embodiment, the sensor 250 is represented as a single sensor. It will be appreciated that in other embodiments, the trailer 215 can include a plurality of sensors 250 provided in one or more of the conditioned spaces of the climate-controlled space 225. In some embodiments, the sensor 250 can monitor one or more climate control parameters (e.g., temperature, humidity, atmosphere, etc.) within the one or more of the conditioned spaces within the climate-controlled space 225 or just outside the trailer 215. The sensor 250 can be used by the climate controller 235 to control operation of the transport climate control system 210.

The sensor 250 can be in electronic communication with a power source (not shown) of the CCU 220. In an embodiment, the sensor 250 can be in electronic communication with the climate controller 235. It will be appreciated that the electronic communication between the sensor 250 and the climate controller 235 can enable network communication of the sensed climate control parameters measured by the sensor 250. The electronic communication between the climate controller 235 and the sensor 250 can enable the sensed climate control parameters to be utilized in a control of the CCU 220.

FIG. 1D illustrates an embodiment of the climate-controlled trailer (or transport unit) 275 that includes the multi-zone transport climate control system (MTCS) 280 that can be towed, for example, by a tractor (not shown). The MTCS 280 includes a CCU 290 and a plurality of remote units 295a, 295b that provide environmental control (e.g. temperature, humidity, air quality, etc.) within a climate-controlled space 300 of the trailer 275. The CCU 290 can be disposed on a front wall 315 of the trailer 275. In an embodiment, the CCU 290 can be a transport refrigeration unit. In other embodiments, it will be appreciated that the CCU 290 can be disposed, for example, on a rooftop or another wall of the trailer 275. The remote unit 295a can be disposed on a ceiling 320 within a second conditioned space 305b and the remote unit 295b can be disposed on the ceiling 320 within the third conditioned space 305c. Each of the remote units 295a, 295b includes an evaporator (not shown) that connects to the rest of the climate control circuit provided in the CCU 290.

It will be appreciated that the embodiments described herein are not limited to tractor and trailer units, but can apply to any type of transport unit (e.g., a truck, a container (such as a container on a flat car, an intermodal container, a marine container, etc.), a box car, a semi-tractor, or other similar transport unit), etc.

The MTCS 280 can include, among other components, a primary climate control system 290A and a secondary climate control system 290B that are in thermal communication with the climate-controlled space 300. The climate-controlled space 300 can be divided into a two or more conditioned spaces 305a, 305b, 305c, e.g., having the same or different cooling requirements, for example, at a first temperature, a second temperature, and a third temperature. The two or more conditioned spaces 305a, 305b, 305c can be a part of an area of the climate-controlled space 300 separated by wall(s) 310. The CCU 290 can operate as a host unit and provide climate control within a first conditioned space 305a of the climate-controlled space 300. The remote unit 295a can provide climate control within a second conditioned space 305b of the climate-controlled space 300. The remote unit 295b can provide climate control within a third conditioned space 305c of the climate-controlled space 300. Accordingly, the MTCS 280 can be used to separately and independently control environmental condition(s) within each of the one or more conditioned spaces 305a, 305b, 305c of the climate-controlled space 300. In some embodiments, the conditioned spaces 305a, 305b, 305c can include one or more of a low temperature conditioned space, e.g., freezer section having a temperature between at or about 0 degrees Celsius to -70 degrees Celsius, a medium temperature conditioned space, e.g., fresh produce section having a temperature between at or about 1 degrees Celsius to 5 degrees Celsius, or other similarly conditioned space(s), e.g., at a temperature between at or about -5 degrees Celsius to 10 degrees Celsius or any ranges between -70 degrees Celsius and 10 degrees Celsius.

The primary climate control system 290A is configured to provide the high temperature side cooling for a cascaded refrigeration cycle arrangement and/or for providing at least a portion of the cooling for one or more thermal loads, such as, component(s) of the trailer 275 and/or one or more of the conditioned spaces. The primary climate control system 290A includes a climate control circuit that connects, for example, a compressor, a condenser, an evaporator, and an expansion device, in which one or more components are located externally of any enclosed space(s) of the trailer 275, e.g., in the ambient atmosphere or external environment, to provide cooling to one or more thermal loads. In some embodiments, all, some, or partial part(s) of the components of the primary climate control system 290A including, for example, the compressor, the condenser, the evaporator (or partial part thereof), and the expansion device, can be located within the CCU 290 and exposed to the external environment. In some embodiments, the CCU 290 can be a cassette-type refrigeration system that is modular for installation and/or replacement.

The secondary climate control system 290B is provided within the climate-controlled space 300 and is provided for the low temperature cooling side of the cascaded refrigeration cycle arrangement to provide cooling for the low temperature climate-controlled space, e.g., conditioned space, e.g., at or about 0 to -70 degrees Celsius, and preferably at or about 0 to -50 degrees Celsius. The secondary climate control system 290B also includes a climate control circuit that connects, for example, a compressor, a condenser, an evaporator, and an expansion device. The secondary climate control system 290B can be in a cascaded refrigeration cycle arrangement with the primary climate control system 290A, e.g., to split the compressor and temperature lift, in which a hybrid coolant loop is in thermal communication with the evaporator of the primary climate control system 290A, e.g., which acts as the primary heat exchanger, and the condenser of the secondary climate control system 290B, which acts as a cascaded heat exchanger with the primary heat exchanger to cool the working fluid of the secondary climate control system 290B (for example, as illustrated in FIGS. 2-3).

The hybrid coolant loop is in thermal communication with the evaporator of the primary climate control system 290A and is configured to transfer thermal load from one or more thermal sources in the trailer 275 using a coolant circulated in the hybrid coolant loop. The thermal sources include, but not limited to, one or more components of the trailer, such as, batteries in the electrified trailer, two or more temperature conditioned space(s), and the condenser of the secondary climate control system 290B, which is provided in the cascaded refrigeration cycle arrangement with the primary climate control system 290A. The coolant can be any coolant used in refrigeration, such as, ethylene glycol, propylene glycol, water, a brine solution, etc.

In some embodiments, the hybrid coolant loop includes a cold side, e.g., coolant loop supply from the evaporator of the primary climate control system 290A, and a hot side that is a coolant loop return to the evaporator of the primary climate control system 290A, e.g., the coolant after thermal transfer with the thermal sources, such as, the condenser of the secondary climate control system 290B, the one or more components of the trailer, such as, the batteries, on-board electronics, auxiliary equipment, or the like, or the two more temperature conditioned spaces. In some embodiments, the coolant loop return can be used for heat recovery for heating one or more components of the trailer, such as, the batteries, water lines, auxiliary equipment, HVAC system(s), or the like.

The MTCS 280 also includes a programmable climate controller 325 and one or more climate control sensors (not shown) that are configured to measure one or more parameters of the MTCS 280 (e.g., an ambient temperature outside of the trailer 275, an ambient humidity outside of the trailer 275, a compressor suction pressure, a compressor discharge pressure, supply air temperatures of air supplied by the CCU 290 and the remote units 295a, 295b into each of the conditioned spaces 305a, 305b, 305c, return air temperatures of air returned from each of the conditioned spaces 305a, 305b, 305c back to the respective CCU 290 or remote unit 295a or 295b, a humidity within each of the conditioned spaces 305a, 305b, 305c, etc.) and communicate climate control data to a climate controller 325. The one or more climate control sensors can be positioned at various locations outside the trailer 275 and/or inside the trailer 275 (including within the climate-controlled space 300).

The climate controller 325 is configured to control operation of the MTCS 280 including components of the primary climate control system 290A, the secondary climate control system 290B, and/or flow of the coolant in the coolant loop. The climate controller 325 can include a single integrated control unit 330 or can include a distributed network of climate controller elements 330, 335. The number of distributed control elements in a given network can depend upon the particular application of the principles described herein. The measured parameters obtained by the one or more climate control sensors can be used by the climate controller 325 to control operation of the MTCS 280.

The climate-controlled trailer 275 includes a sensor 340. In the illustrated embodiment, the sensor 340 is represented as a single sensor. It will be appreciated that in other embodiments, the climate-controlled trailer 275 can include a plurality of sensors 340. In some embodiments, the sensor 340 can monitor one or more climate control parameters (e.g., temperature, humidity, atmosphere, etc.) within one or more of the conditioned spaces of the climate-controlled space 300.

The sensor 340 can be in electronic communication with a power source (not shown) of the CCU 290. In an embodiment, the sensor 340 can be in electronic communication with the climate controller 325. It will be appreciated that the electronic communication between the sensor 340 and the climate controller 325 can enable network communication of the sensed climate control parameters measured by the sensor 340. The electronic communication between the climate controller 325 and the sensor 340 can enable the sensed climate control parameters to be utilized in a control of the CCU 290.

FIG. 1E illustrates an embodiment of the intermodal container 350 having the transport climate control system 355 for providing climate control within a climate-controlled space 358. The transport climate control system 355 includes a climate control unit (CCU) 360 that is mounted to a side 352 at one end of the container 350. In an embodiment, the CCU 360 can be a transport refrigeration unit.

The transport climate control system 355 can include, among other components, a primary climate control system 365A and a secondary climate control system 365B that are in thermal communication with the climate-controlled space 358. In some embodiments, the primary climate control system 365A is only in thermal communication to the climate-controlled space 358 via a hybrid coolant loop. The climate-controlled space 358 can include two or more conditioned spaces, e.g., having different cooling requirements, for example, at a first temperature and second temperature. In some embodiments, the two or more conditioned spaces can include one or more of a low temperature conditioned space, e.g., freezer section having a temperature between at or about 0 degrees Celsius to -70 degrees Celsius, and preferably 0 to -50 degrees Celsius, a medium temperature conditioned space, e.g., fresh produce section having a temperature between at or about 1 degrees Celsius to 5 degrees Celsius, or other similarly conditioned space(s), e.g., at a temperature between at or about -5 degrees Celsius to 10 degrees Celsius or any ranges between -70 degrees Celsius and 10 degrees Celsius.

The primary climate control system 365A is configured to provide the high temperature side cooling for a cascaded refrigeration cycle arrangement and/or for providing at least a portion of the cooling for one or more thermal loads, such as, component(s) of the trailer and/or one or more of the conditioned spaces. The primary climate control system 365A includes a climate control circuit that connects, for example, a compressor, a condenser, an evaporator, and an expansion device, in which one or more components are located externally of any enclosed space(s) of the container 350, e.g., in the ambient atmosphere or external environment, to provide cooling to one or more thermal loads. In some embodiments, all, some, or partial part(s) of the components of the primary climate control system 365A including, for example, the compressor, the condenser, the evaporator (or partial part thereof), and the expansion device, can be located within the CCU 360 and exposed to the external environment.

The secondary climate control system 365B is provided within the climate-controlled space 358 and is provided for the low temperature cooling side of the cascaded refrigeration cycle arrangement to provide cooling for the low temperature climate-controlled space, e.g., conditioned space, e.g., at or about 0 to -70 degrees Celsius, and preferably 0 to -50 degrees Celsius. The secondary climate control system 365B also includes a climate control circuit that connects, for example, a compressor, a condenser, an evaporator, and an expansion device. The secondary climate control system 365B can be in a cascaded refrigeration cycle arrangement with the primary climate control system 365A, e.g., to split the compressor and temperature lift, in which a hybrid coolant loop is in thermal communication with the evaporator of the primary climate control system 365A, e.g., which acts as the primary heat exchanger, and the condenser of the secondary climate control system 365B, which acts as a cascaded heat exchanger with the primary heat exchanger to cool the working fluid of the secondary climate control system 365B (for example, as illustrated in FIGS. 2-3).

The hybrid coolant loop is in thermal communication with the evaporator of the primary climate control system 365A and is configured to transfer thermal load from one or more thermal sources in the container 350 using a coolant circulated in the hybrid coolant loop. The thermal sources include, but not limited to, one or more components of the container, such as, batteries in the electrified container, medium temperature conditioned space(s), and the condenser of the secondary climate control system 365B, which is provided in the cascaded refrigeration cycle arrangement with the primary climate control system 365A. The coolant can be any coolant used in refrigeration, such as, ethylene glycol, propylene glycol, water, a brine solution, etc.

In some embodiments, the hybrid coolant loop includes a cold side, e.g., coolant loop supply from the evaporator of the primary climate control system 365A, and a hot side that is a coolant loop return to the evaporator of the primary climate control system 365A, e.g., the coolant after thermal transfer with the thermal sources, such as, the condenser of the secondary climate control system 365B, the one or more components of the container, such as, the batteries, on-board electronics, auxiliary equipment, or the like, or the medium temperature (or second) conditioned space, e.g., for fresh produce, at a second temperature, e.g., between at or about 1 and 5 degrees Celsius. In some embodiments, the coolant loop return can be used for heat recovery for heating one or more components of the container, such as, the batteries, water lines, auxiliary equipment, or the like.

The transport climate control system 355 also includes a programmable climate controller 370 and one or more climate control sensors (not shown) that are configured to measure one or more parameters of the transport climate control system 355 (e.g., an ambient temperature outside of the container 350, an ambient humidity outside of the container 350, a compressor suction pressure, a compressor discharge pressure, a supply air temperature of air supplied by the CCU 360 into the climate-controlled space 358, a return air temperature of air returned from the climate-controlled space 358 back to the CCU 360, a humidity within the climate-controlled space 358, etc.) and communicate the measured parameters to the climate controller 370. The one or more climate control sensors can be positioned at various locations outside the container 350 and/or inside the container 350 (including within the climate-controlled space 358).

The climate controller 370 is configured to control operation of the transport climate control system 355 including one or more components of the primary climate control system 365A, the secondary climate control system 365B, and/or flow of the coolant in the coolant loop. The climate controller 370 can include a single integrated control unit 372 or can include a distributed network of climate controller elements 372, 374. The number of distributed control elements in a given network can depend upon the particular application of the principles of this disclosure. The measured parameters obtained by the one or more climate control sensors can be used by the climate controller 370 to control operation of the transport climate control system 355.

The container 350 includes a sensor 375. In the illustrated embodiment, the sensor 375 is represented as a single sensor. It will be appreciated that in other embodiments, the container 350 can include a plurality of sensors 375. In some embodiments, the sensor 375 can monitor one or more climate control parameters (e.g., temperature, humidity, atmosphere, etc.) within one or more of the conditioned spaces of the climate-controlled space 358 or just outside the container 350. The sensor 375 can be used by the climate controller 370 to control operation of the transport climate control system 355. The sensor 375 can be in electronic communication with a power source (not shown) of the CCU 360. In an embodiment, the sensor 375 can be in electronic communication with the climate controller 370. It will be appreciated that the electronic communication between the sensor 375 and the climate controller 370 can enable network communication of the sensed climate control parameters measured by the sensor 375. The electronic communication between the climate controller 370 and the sensor 375 can enable the sensed climate control parameters to be utilized in a control of the CCU 360.

FIG. 2 is a schematic diagram of a transport climate control system 400 that includes a primary climate control system 405 and a secondary climate control system 410, according to one embodiment that can be used with any of the transport unit(s) 100, 150, 215, 275, 350 and/or transport climate control system(s) 105, 155, 210, 280, 355, as discussed above. The transport unit can be an electrified system, such as, an electric or hybrid transport unit, e.g., battery powered. The primary climate control system 405 and the secondary climate control system 410 are in thermal communication with a climate-controlled space having at least a first conditioned space 420A and a second conditioned space 420B that can both be configured to contain a cargo (not shown). In some embodiments the first conditioned space 420A and the second conditioned space 420B are separated by a wall. In some embodiments, the primary climate control system 405 is only in thermal communication to the climate-controlled space via a hybrid coolant loop 430. While the climate-controlled space is discussed herein as having two conditioned spaces, it is understood that the climate-controlled space can have additional conditioned spaces depending on the refrigeration requirement(s) of the transport unit, e.g., three, four, five, six, etc. conditioned spaces for cargo having different refrigeration temperature requirements.

The primary climate control system 405 is configured to provide the high temperature side cooling for a cascaded refrigeration cycle arrangement and/or for providing at least a portion of the cooling for one or more thermal loads, such as, component(s) of the transport unit and/or one or more of the conditioned spaces. The primary climate control system 405 includes a climate control circuit that connects, for example, a compressor 406, a condenser 407, an evaporator (or primary heat exchanger) 408, and expansion device 409. In some embodiments, the primary climate control system 405 can include a coolant loop 402 for providing cooling to the condenser 407 and/or the primary climate control system 405 can include an air fan for cooling the condenser 407, e.g., directly using ambient air for air cooling. In some embodiments, the coolant loop 402 can include a pump 403 for circulating the coolant and a heat exchanger 404 for exchanging heat from the coolant to the external environment. In some embodiments, one or more components of the primary climate control system 405, e.g., one or more of the compressor 406, the condenser 406, the evaporator 408, and expansion device 409, are located externally of any enclosed space(s) of the transport unit, e.g., outside the conditioned space(s) and/or exposed to the ambient atmosphere or external environment, e.g., in a CCU 401, to provide climate control within the climate-controlled or conditioned spaces 420A, 420B. In some embodiments, all of the components of the primary climate control system 405 including, for example, the compressor 406, the condenser 407, the evaporator 408, the expansion device 409, and the coolant loop 402 are located within the CCU 401, in which all of the components are outside any of the conditioned space(s) and/or exposed and/or open to the external environment. In other embodiments, most of the components of the primary climate control system 405 including, for example, the compressor 406, the condenser 407, the expansion device 409, and the coolant loop 402 can be located within the CCU 401 and outside of any conditioned space(s) and/or exposed and/or open to the external environment, while the evaporator 408 is at least partially exposed and/or open to the external environment, e.g., the side of the evaporator 408 having the refrigerant with higher levels of toxicity and/or flammability is exposed and/or open to the external environment. In some embodiments, the CCU 401 can be a cassette-type refrigeration system that is modular for installation and/or replacement.

The secondary climate control system 410 is provided for the low temperature cooling side of the cascaded refrigeration cycle arrangement to provide cooling for the low temperature climate-controlled space, e.g., conditioned space 420A, e.g., at or about 0 to -70 degrees Celsius, and preferably at or about 0 to -50 degrees Celsius. The secondary climate control system 410 can also include a climate control circuit that connects, for example, a compressor 411, a condenser (cascaded heat exchanger) 412, an evaporator 414, and an expansion device 413. The secondary climate control system 410 can be in the cascaded refrigeration cycle arrangement with the primary climate control system 405, e.g., to split the compressor and temperature lift, in which a hybrid coolant loop 430 is in thermal communication with the evaporator (or primary heat exchanger) 408 of the primary climate control system 405, and the condenser (or cascaded heat exchanger) of the secondary climate control system 410 to cool the working fluid of the secondary climate control system 410. In some embodiments, one or more components of the secondary climate control system 410, e.g., one or more of the compressor 411, the evaporator 414, and the expansion device 413, are located in the low temperature climate-controlled space(s), e.g., conditioned space(s) 420A, to provide climate control within the climate-controlled or conditioned space(s) 420A. In other embodiments, only the evaporator 414 is located in the conditioned space 420A to provide climate control within the climate-controlled or conditioned space(s) 420A.

The hybrid coolant loop 430 can include one or more components including, but not limited to, valves 432-1, 432-2, 432-3, 432-4, 432-5, 432-6, 432-7, 432-8 for controlling the flow of coolant through the coolant loop 430, pump 434 for circulating the coolant, and optionally a receiver 436 for storing coolant. In some embodiments, the hybrid coolant loop 430 is in thermal communication with the evaporator 408 of the primary climate control system 405 and is configured to transfer thermal load from one or more thermal sources in the transport unit using a coolant circulated in the hybrid coolant loop 430. The thermal sources can include, but not limited to, one or more components of the transport unit, such as, batteries in the electrified transport unit, medium temperature conditioned space(s) 420B, and the condenser 412 of the secondary climate control system 410, which is provided in the cascaded refrigeration cycle arrangement with the primary climate control system 405. In some embodiments, the transport unit can include a battery load 450 that is in thermal communication with the hybrid coolant loop 430. It is appreciated that while the battery load 450 is discussed herein, the load can also include other components of the transport unit, such as, but not limited to, engine components, on-board electronics, HVAC components, auxiliary equipment, or the like, in which the hybrid coolant loop 430 can be used for cooling and/or heating the components, as discussed below. The coolant can be any coolant used in refrigeration, such as, ethylene glycol, propylene glycol, water, or a brine solution.

The hybrid coolant loop 430 includes a cold side that is a coolant loop supply, e.g., from the evaporator 408 (e.g., primary heat exchanger) of the primary climate control system 405, and a hot side that is a coolant loop return to the evaporator 408, e.g., the coolant after thermal transfer with the thermal sources, such as, the condenser 412 of the secondary climate control system 410, the one or more components of the transport unit, such as, the batteries, on-board electronics, auxiliary equipment, or the like, or the medium temperature conditioned space, e.g., via a heat exchanger 460. While a second conditioned space is discussed herein, such disclosure is not intended to be limiting, but rather, two, three, four, or more conditioned spaces can also be used with the hybrid coolant loop 430. In some embodiments, the coolant loop return can be used for heat recovery for heating one or more components of the transport unit, such as, the batteries, water lines, auxiliary equipment, HVAC system(s), or the like.

Operation of the transport control system 400 for one or more embodiments can include the following.

In the first conditioned space 420A, to achieve the low temperature cooling, e.g., frozen or deep frozen temperatures between at or about 0 degrees Celsius and -70 degrees Celsius, and preferably -50 degrees Celsius, the compressor 411 (of the secondary climate control system 410) compresses a working fluid (e.g., a heat transfer fluid such as a refrigerant or the like) from a relatively lower pressure gas to a relatively higher-pressure gas. In an embodiment, the compressor 411 can be a centrifugal compressor, a screw compressor, a scroll compressor, or the like. The relatively higher-pressure gas is also at a relatively higher temperature, which is discharged from the compressor 411 and flows through refrigerant line to the condenser 412 (e.g., the low temperature stage of the cascaded refrigeration cycle arrangement). The working fluid flows through the condenser 412 and rejects heat to the coolant in the hybrid coolant loop 430, thereby cooling the working fluid. The cooled working fluid, which is now in a liquid form, flows to the expansion device 413, in which the expansion device 413 reduces the pressure of the working fluid. As a result, a portion of the working fluid is converted to a gaseous form.

The working fluid, which is now in a mixed liquid and gaseous form flows through the evaporator 414 and absorbs heat from a process fluid (e.g., air in the first conditioned space 420A, etc.), heating the working fluid, and converting it to a gaseous form. The gaseous working fluid then returns to the compressor 411. The above-described process continues while the secondary climate control system 410 is operating, for example, in a cooling mode (e.g., while the compressor 411 is enabled) to cool the low temperature conditioned space 420A to a temperature between at or about 0 degrees Celsius and -70 degrees Celsius. In some embodiments, the working fluid in the secondary climate control system 410 can be a refrigerant, that has no or low (or medium) levels of toxicity and/or flammability such as, for example, carbon dioxide, or lower toxicity refrigerants, such as, A2L or A1, or any blend thereof, as well as coolants such as, ethylene glycol, propylene glycol, water, a brine solution, or combination thereof.

The secondary climate control system 410 is in the cascaded refrigeration cycle arrangement with the primary climate control system 405, in which the hybrid coolant loop 430 is in thermal communication with the evaporator 408 of the primary climate control system 405 and the condenser 412 of the secondary climate control system 410 for transferring the heat load from the secondary climate control system 410 to the primary climate control system 405. More particularly, the primary climate control system 405 receives thermal energy that is rejected from the coolant of the hybrid coolant loop 430, in which the hybrid coolant loop 430 is configured to divide or adjust an amount (a partial flow or total flow) of coolant, e.g., via valves 432-1, 432-8, for cooling the working fluid of the secondary climate control system 410. That is, the primary climate control system 405 is configured to provide the cooling for the working fluid of the secondary climate control system 410, e.g., acts as the high temperature stage of the cascaded refrigeration arrangement between the primary heat exchanger 408 and the cascaded heat exchanger 412, and/or provide cooling for the other thermal loads in the transport unit.

The primary climate control system 405 can function according to generally known principles in order to remove heat from the coolant. The first compressor 406 compresses a working fluid (e.g., a heat transfer fluid such as a refrigerant or the like) from a relatively lower pressure gas to a relatively higher-pressure gas. In an embodiment, the first compressor 406 can be a centrifugal compressor, a screw compressor, a scroll compressor, or the like. The relatively higher-pressure gas is also at a relatively higher temperature, which is discharged from the first compressor 406 and flows through refrigerant line to the first condenser 407. The working fluid flows through the first condenser 407 and rejects heat to the coolant (or air) in the secondary coolant loop 402, thereby cooling the working fluid. The cooled working fluid, which is now in a liquid form, flows to the expansion device 409, in which the expansion device 409 reduces the pressure of the working fluid. As a result, a portion of the working fluid is converted to a gaseous form.

The working fluid, which is now in a mixed liquid and gaseous form flows through the evaporator 408 and absorbs heat from the coolant, heating the working fluid, and converting it to a gaseous form. The gaseous working fluid then returns to the first compressor 406. In some embodiments, the working fluid in the primary climate control system 405 can be a refrigerant, that has higher levels of toxicity and/or flammability, such as, a hydrocarbon based refrigerant, e.g., propane, isobutane, propylene, blends thereof, or the like; chlorinated and/or fluorinated based refrigerant, e.g., a low global warming potential refrigerant, such as, but not limited to, R404A, R507A, R452A, R448A, R449A, R407A/B/C/D/E/F/G/H/I, R454A, R454B R454C, R454D, or R134a, R513A, R1234yf, R1234ze(E), R515A, R515B, R23, R508A, R508B, LFR5A, R13, R32, R125, R744, R1132(E), R152a, etc.; or any blend thereof.

The secondary coolant loop 402 can circulate the coolant via the pump 403 through the heat exchanger 404, e.g., a fan and coil structure, for exchanging heat from the coolant to the external environment. More particularly, the cooled coolant flows through the condenser 407 and absorbs the rejected heat from the working fluid of the primary climate control system 405. In some embodiments, the coolant can be any coolant used in refrigeration, such as, ethylene glycol, propylene glycol, water, a brine solution, etc.

The hybrid coolant loop 430 is configured to distribute, divide, and/or control the flow of coolant through the coolant loop 430 to various components of the transport unit. More particularly, the hybrid coolant loop 430 is configured such that a portion or all of the coolant can be stored in the receiver 436 and the pump 434 is used to circulate the coolant through the hybrid coolant loop 430 to supply coolant for cooling one or more components of the transport unit, the cascaded heat exchanger 412, and/or the second conditioned space 420B, or the like.

In some embodiments, the coolant cooled by the evaporator 408, e.g., supply flow, can flow through the cold side of the coolant loop 430 through a series of valves e.g., valves 432-2, 432-3, that are configured to control the flow and/or partial flow of coolant to one or more heat transfer components of the transport unit to provide cooling via thermal exchange with the one or more components of the transport unit, e.g., heat exchangers for thermal transfer between the coolant and the one or more components. In some embodiments, the one or more components can include a battery load 450, e.g., batteries used in an electric transport unit or hybrid transport unit. It is understood that while the heat load is discussed herein as a battery load 450, such disclosure is not intended to be limiting. Rather, the coolant can be used to cool (or heat) other components of the transport unit that need heating and/or cooling, such as, HVAC components, on-board electronics, auxiliary equipment, or the like.

In some embodiments, the hybrid coolant loop 430 is configured to distribute a partial, all, or none of the flow of the cooled coolant from the cold side of the coolant loop 430 to provide cooling to one or more of the second conditioned space(s) 420B and/or the cascaded heat exchanger 412. For example, valve(s) 432-1 and/or 432-8 can be configured to control the flow (or partial or no flow) of cooled coolant to the second conditioned space 420B, e.g., medium temperature controlled space, to cool the second conditioned space 420B via the heat exchanger 460 to a second temperature, e.g., between at or about 1 and 5 degrees Celsius, e.g., for fresh produce. That is, valve 432-1 can be a control valve that is configured to control or divide a flow of the coolant to one or more of the cascaded heat exchanger 412 and the second conditioned space 420B. When the coolant flows (partially or all) to the second conditioned space 420B, the coolant loop is configured such that the coolant absorbs heat from the second conditioned space 420B, e.g., via air to coolant heat transfer from a fan and coil heat exchanger, heating the coolant. The return flow of the coolant heated by the heat exchanger 460 can be controlled, e.g., by valve 432-8, e.g., to one or more of the pump 434 and receiver 436. As such, the hybrid coolant loop 430 can be configured to bypass (or at least partially bypass) the cascaded heat exchanger 412 (e.g., the condenser of the secondary climate control system 410) to provide a hybrid coolant loop for providing cooling for medium temperature refrigeration, e.g., for medium temperature conditioned space(s), e.g., temperatures between at or about 1 degree Celsius to 25 degrees Celsius.

In some embodiments, the hybrid coolant loop 430 can be further configured, e.g., via one or more of valves 432-7, 432-6, 432-5, 432-4, to control (or divide or split) the flow of the heated coolant to the battery load 450 to provide heating, e.g., heating the battery(ies), on-board electronics, auxiliary equipment, water lines, or other component of the transport unit, via heat exchange e.g., for heat recovery. The heated coolant flows through the evaporator 408 (or primary heat exchanger) of the primary climate control system 405, which receives thermal energy that is rejected from the coolant of the hybrid coolant loop 430 to the working fluid.

In some embodiments, one or more sensors can be provided on the hybrid coolant loop 430 and/or the one or more conditioned spaces 420A, 420B to measure one or more conditions of the same. More particularly, the one or more sensors can include a temperature sensor for measuring the temperature of the coolant and/or the temperature of the one or more conditioned spaces and/or a flow sensor for measuring the flow of coolant. In some embodiments, the transport climate control system can be configured to determine, from the temperature and/or flow of the coolant, the heat load and/or availability of coolant for providing cooling to the transport climate control system.

It is appreciated that while a first conditioned space 420A and a second conditioned space 420B are discussed herein, such disclosure is not intended to be limiting. Rather, the climate controlled space can include multiple conditioned spaces at one or more temperatures, e.g., multiple temperature levels, based on the available load and/or necessary cooling for the transport unit.

As such, the hybrid coolant loop 430 is configured to control, e.g., by dividing, splitting, or otherwise controlling, the flow of coolant to one or more heat transfer components of the transport unit. More particularly, the hybrid coolant loop 430 is configured to control the flow of coolant (either concurrently or asynchronously) to the cascaded heat exchanger 412 and/or the second conditioned space(s) such that the first climate control system 405 is in a cascaded refrigeration cycle arrangement with the second climate control system 410 and/or the hybrid coolant loop 430 is able to bypass (or at least partially bypass) the cascaded heat exchanger 412 to provide medium temperature refrigeration to one or more conditioned spaces and/or the hybrid coolant loop 430 is configured to provide cooling and/or heating to various components of the transport unit.

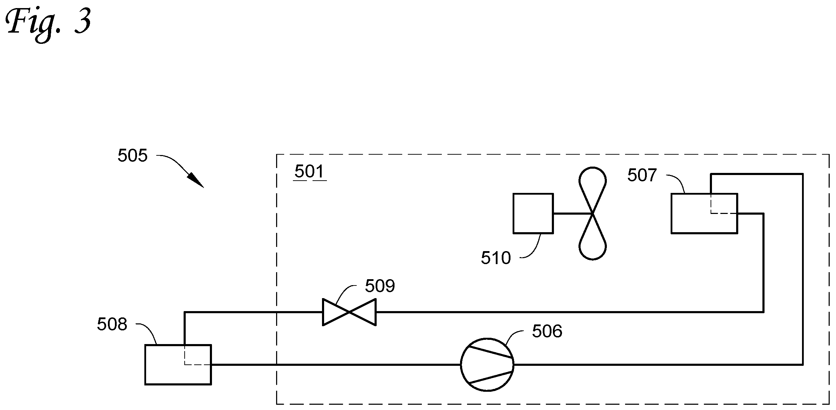

FIG. 3 is a schematic diagram of a primary climate control system 505 that can be used with any of the transport climate control system(s) 105, 155, 210, 280, 355, 400 and/or secondary climate control system(s) 105B, 155B, 221B, 290B, 365B, 410, discussed above. The transport unit can be an electrified system, such as, an electric or hybrid transport unit, e.g., battery powered. The primary climate control system 505 and the secondary climate control system, e.g., secondary climate control system(s) 105B, 155B, 221B, 290B, 365B, are in thermal communication with a climate-controlled space having at least a first conditioned space, e.g., 420A, and a second conditioned space, e.g., 420B, that can both be configured to contain a cargo (not shown).

In this embodiment, the primary climate control system 505 differs from the primary climate control system 405, as discussed above, in that the primary climate control system 505 includes an air fan 510 to provide cooling to the working fluid of the primary climate control system 505. Specifically, the primary climate control system 505 is configured to provide the high temperature side cooling for a cascaded refrigeration cycle arrangement and/or for providing at least a portion of the cooling for one or more thermal loads, such as, component(s) of the transport unit and/or one or more of the conditioned spaces. The primary climate control system 505 includes a climate control circuit that connects, for example, a compressor 506, a condenser 507, an evaporator (or primary heat exchanger) 508, and expansion device 509, in which one or more components are located externally of any enclosed space(s) of the transport unit, e.g., exposed to the ambient atmosphere or external environment, e.g., in a CCU 501, to provide climate control within the climate-controlled or conditioned spaces, e.g., 420A, 420B. In some embodiments, the primary climate control system 505 includes the air fan 510 for cooling the condenser 507, e.g., directly using ambient air for air cooling. In some embodiments, all or some of the components of the primary climate control system 505 including, for example, the compressor 506, the condenser 507, the evaporator 508, the expansion device 509, and the air fan 510 can be located within the CCU 501 and exposed and/or open to the external environment. In some embodiments, the CCU 501 can be a cassette-type refrigeration system that is modular for installation and/or replacement.

The remaining components and/or operation of the transport climate control system(s) 105, 155, 210, 280, 355, 400 having the primary climate control system 505 is the same or similar as the system(s) and components, discussed above.

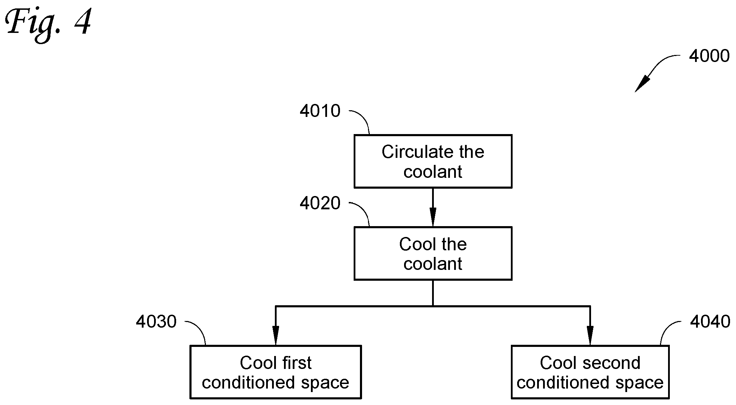

Operation of any of the transport climate control system(s) 105, 155, 210, 280, 355, 400 is described below with respect to FIG. 4.

FIG. 4 illustrates a flowchart for a method 4000 for providing cooling to a first conditioned space and a second conditioned space for a transport unit using, for example, the transport climate control system 400 shown in FIG. 2, according to one embodiment.

The method 4000 begins at 4010 whereby a controller (e.g., the climate controller 125, 175, 235, 325, 370 shown in FIGS. 1A - 1E) is configured to circulate a coolant through a hybrid coolant loop that is in thermal communication with at least a primary heat exchanger (or evaporator) of a first climate control system and/or one or more thermal sources in the transport unit, for example, a cascaded heat exchanger (or condenser) of a second climate control system, the second conditioned space, and/or one or more components of the transport unit, e.g., batteries, on-board electronics, or auxiliary equipment of the transport unit. In some embodiments, the controller is configured to determine the amount of coolant to provide the cooling for the second climate control system and control, e.g., via valve 432-1 or 432-8, the flow of coolant through the cascaded heat exchanger and/or the second conditioned space. In some embodiments, the hybrid coolant loop includes a cold side that is a coolant loop supply, e.g., from the evaporator (e.g., primary heat exchanger) of the primary climate control system, and a hot side that is a coolant loop return to the evaporator, e.g., the coolant after thermal transfer with the thermal sources, such as, the condenser of the secondary climate control system, the one or more components of the transport unit, such as, the batteries, on-board electronics, auxiliary equipment, or the like, or the medium temperature conditioned space, e.g., via a heat exchanger. The method 4000 then proceeds to 4020.

At 4020, the controller is configured to cool to the coolant circulating through the hybrid cooling loop using the first climate control system that includes a first compressor, a first condenser, a first expansion device, and the primary heat exchanger that is configured to thermally communicate with the hybrid coolant loop, e.g., by controlling at least one of compressor speed, fan speed (of the evaporator or first condenser), coolant flow, or the like. The primary climate control system can function according to generally known principles in order to remove heat from the coolant. The first compressor compresses a working fluid (e.g., a heat transfer fluid such as a refrigerant or the like) from a relatively lower pressure gas to a relatively higher-pressure gas. In an embodiment, the first compressor can be a centrifugal compressor, a screw compressor, a scroll compressor, or the like. The relatively higher-pressure gas is also at a relatively higher temperature, which is discharged from the first compressor and flows through refrigerant line to the first condenser. The working fluid flows through the first condenser and rejects heat to the coolant (or air) in the secondary coolant loop, thereby cooling the working fluid. The cooled working fluid, which is now in a liquid form, flows to the expansion device, in which the expansion device reduces the pressure of the working fluid. As a result, a portion of the working fluid is converted to a gaseous form. The working fluid, which is now in a mixed liquid and gaseous form flows through the evaporator and absorbs heat from the coolant, heating the working fluid, and converting it to a gaseous form. The gaseous working fluid then returns to the first compressor. The method 4000 then continues to 4030 and/or 4040.

At 4030, the controller is configured to cool the first conditioned space to a first temperature using the second climate control system that includes a second compressor, a cascaded heat exchanger, a second expansion device, and an evaporator, e.g., by controlling at least one of compressor speed, fan speed (of the evaporator), coolant flow, or the like. For example, in an embodiment, to achieve the low temperature cooling, e.g., frozen or deep frozen temperatures between at or about 0 degrees Celsius and -70 degrees Celsius, preferably to -50 degrees Celsius, the compressor compresses a working fluid (e.g., a heat transfer fluid such as a refrigerant or the like) from a relatively lower pressure gas to a relatively higher-pressure gas. In an embodiment, the compressor can be a centrifugal compressor, a screw compressor, a scroll compressor, or the like. The relatively higher-pressure gas is also at a relatively higher temperature, which is discharged from the compressor and flows through refrigerant line to the condenser (e.g., the low temperature stage of the cascaded refrigeration cycle arrangement). The working fluid flows through the condenser and rejects heat to the coolant in a hybrid coolant loop, thereby cooling the working fluid. The cooled working fluid, which is now in a liquid form, flows to the expansion device, in which the expansion device reduces the pressure of the working fluid. As a result, a portion of the working fluid is converted to a gaseous form. The working fluid, which is now in a mixed liquid and gaseous form flows through the evaporator and absorbs heat from a process fluid (e.g., air in the first conditioned space, etc.), heating the working fluid, and converting it to a gaseous form. The gaseous working fluid then returns to the compressor.

At 4040, the controller is configured to control the hybrid coolant loop to distribute, divide, and/or control the flow of coolant through the coolant loop to various components of the transport unit. More particularly, the controller is configured to control the flow of coolant in the hybrid coolant loop such that a portion or all of the coolant is supplied for cooling one or more of the one or more components of the transport unit, the cascaded heat exchanger (condenser of the second climate control system), and/or the second conditioned space. For example, in some embodiments, the control controls the hybrid coolant loop to distribute a partial, all, or none of the flow of the cooled coolant from the cold side of the coolant loop to provide cooling to one or more of the second conditioned space(s) and/or the cascaded heat exchanger. For example, the controller can control valve(s), e.g., 432-1 and/or 432-8, to control the flow (or partial or no flow) of cooled coolant to the second conditioned space, e.g., medium temperature controlled space, to cool the second conditioned space via the heat exchanger to a second temperature, e.g., between at or about 1 and 5 degrees Celsius, e.g., for fresh produce. When the coolant flows (partially or all) to the second conditioned space, the coolant loop is configured such that the coolant absorbs heat from the second conditioned space, e.g., via air to coolant heat transfer from a fan and coil heat exchanger, heating the coolant. As such, the controller can control the hybrid coolant loop to bypass (or at least partially bypass) the cascaded heat exchanger (e.g., the condenser of the secondary climate control system) to provide a hybrid coolant loop for providing cooling for medium temperature refrigeration, e.g., for medium temperature conditioned space(s), e.g., temperatures between at or about 1 degree Celsius to 25 degrees Celsius.

In some embodiments, the controller can be configured to control the flow of coolant cooled by the evaporator, e.g., supply of cold flow, through the cold side of the coolant loop through a series of valves e.g., valves 432-2, 432-3, to one or more heat transfer components of the transport unit to provide cooling via thermal exchange with the one or more components of the transport unit, e.g., heat exchangers for thermal transfer between the coolant and the one or more components. In some embodiments, the one or more components can include a battery load, e.g., batteries used in an electric transport unit or hybrid transport unit. It is understood that while the heat load is discussed herein as a battery load, such disclosure is not intended to be limiting. Rather, the coolant can be used to cool (or heat) other components of the transport unit that need heating and/or cooling, such as, HVAC components, on-board electronics, auxiliary equipment, or the like.

In some embodiments, the controller can be configured to control the flow of coolant through the hybrid coolant loop 430 to control (or divide or split) the flow of the heated coolant to the battery load to provide heating, e.g., heating the battery(ies), on-board electronics, auxiliary equipment, water lines, or other component of the transport unit, via heat exchange e.g., for heat recovery. The heated coolant flows through the evaporator (or primary heat exchanger) of the primary climate control system, which receives thermal energy that is rejected from the coolant of the hybrid coolant loop to the working fluid.

In view of the structure, arrangement of the transport climate control system, and method, as discussed herein, refrigerants that have higher levels of toxicity and/or flammability can be used in space(s) that are located externally of any enclosed space(s) of the transport unit, e.g., exposed to the ambient environment, to reduce, limit, or prevent exposure of refrigerants that have higher levels of toxicity and/or flammability in enclosed space(s), whereas refrigerants that have low (or medium) or no toxicity and/or flammability are used in conditioned (or enclosed) spaces within the transport unit to provide low temperature refrigeration. Such structure, arrangement of the transport climate control system, and method thereof can also provide medium temperature refrigeration for one or more other conditioned spaces, in which the coolant cooled by the primary climate control system is circulated via the hybrid coolant loop for thermal communication with the one or more conditioned spaces. The structure and arrangement of the transport climate control system is also configured to allow heat recovery and temperature control of one or more components of the transport unit.

*Aspects.* It is noted that any aspect can be combined with any other aspect below. References to a system configured to provide a temperature for cooling a conditioned space may otherwise expressed as a system configured to cool a conditioned space to a temperature (e.g., a transport climate control system configured to cool a first conditioned space to a first temperature and to cool a second conditions space to a second temperature).
Aspect 1. A transport climate control system configured to provide a first temperature for cooling a first conditioned space and a second temperature for cooling a second conditioned space, the transport climate control system comprising:
   a first climate control system including a first compressor, a first condenser, a first expansion device, and a primary heat exchanger that is configured to thermally communicate with a coolant loop,
   the secondary climate control system including a second compressor, a cascaded heat exchanger, a second expansion device, and an evaporator; and
   the coolant loop having a coolant,
   wherein the coolant loop is configured to thermally communicate with the primary heat exchanger, and wherein the coolant loop is further configured to thermally communicate with one or more of the cascaded heat exchanger and the second conditioned space.
Aspect 2. The transport climate control system of Aspect 1, wherein the secondary climate control system is configured to thermally communicate with the first conditioned space for cooling to the first temperature when the coolant loop thermally communicates with the cascaded heat exchanger.
Aspect 3. The transport climate control system of any of Aspects 1-2, wherein the coolant loop comprises a heat exchanger provided in the second conditioned space for cooling to the second temperature when the coolant loop thermally communicates with the second conditioned space.
Aspect 4. The transport climate control system of any of Aspects 1-3, wherein the coolant loop comprises a control valve for controlling a flow of the coolant to the one or more of the cascaded heat exchanger and the second conditioned space.
Aspect 5. The transport climate control system of Aspect 4, wherein the control valve is configured to divide the flow of the coolant to the cascaded heat exchanger and the second conditioned space.
Aspect 6. The transport climate control system of any of Aspects 1-5, wherein the coolant loop includes a cold side that is configured to cool one or more components of a transport unit by heat exchange with the coolant and a hot side that is configured to heat one or more components of the transport unit by heat exchange with the coolant.
Aspect 7. The transport climate control system of Aspect 6, wherein the one or more components of the transport unit include batteries for heating and/or cooling.
Aspect 8. The transport climate control system of any of Aspects 6-7, wherein the coolant loop comprises one or more control valves for controlling a flow of the coolant to the one or more components of the transport unit.
Aspect 9. The transport climate control system of any of Aspects 1-8, wherein the coolant loop comprises a receiver for receiving the coolant and a pump for circulating the coolant in the coolant loop.
Aspect 10. The transport climate control system of any of Aspects 1-9, wherein the second temperature is at or between at or about 1 and 5 degrees Celsius and the first temperature is at or between 0 and -70 degrees Celsius.
Aspect 11. The transport climate control system of any of Aspects 1-10, wherein the first climate control system includes a second coolant loop having a second coolant and configured to thermally communicate with the first condenser and a second heat exchanger for cooling the second coolant.
Aspect 12. The transport climate control system of Aspect 11, wherein the second heat exchanger is a coolant to air heat exchanger in communication with an external environment.
Aspect 13. The transport climate control system of any of Aspects 1-12, wherein the first condenser is air cooled.
Aspect 14. The transport climate control system of Aspect 11, wherein the second coolant is ethylene glycol, propylene glycol, water, or a brine solution.
Aspect 15. The transport climate control system of any of Aspects 1-14, wherein the coolant is ethylene glycol, propylene glycol, water, or a brine solution.
Aspect 16. The transport climate control system of any of Aspects 1-15, wherein a refrigerant in the first climate control system is a hydrocarbon based refrigerant, chlorinated and/or fluorinated based refrigerants, or a blend thereof.
Aspect 17. The transport climate control system of any of Aspects 1-16, wherein a refrigerant in the second climate control system is carbon dioxide.
Aspect 18. A method of providing a first conditioned space at a first temperature and providing a second conditioned space at a second temperature, the method comprising:
   cooling the first conditioned space to the first temperature using a second climate control system that includes a second compressor, a cascaded heat exchanger, a second expansion device, and an evaporator;
   circulating a coolant through a hybrid coolant loop that is in thermal communication with at least a primary heat exchanger, the cascaded heat exchanger, and the second conditioned space;
   cooling the coolant circulating through the hybrid coolant loop using a first climate control system including a first compressor, a first condenser, a first expansion device, and the primary heat exchanger that is configured to thermally communicate with the hybrid coolant loop; and
   controlling a flow of the coolant to one or more of the cascaded heat exchanger or the second conditioned space, wherein the second conditioned space is cooled to the second temperature via thermal communication of the coolant and the second conditioned space.

The terminology used in this specification is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This Specification and the embodiments described are exemplary only, with the true scope and spirit of the disclosure being indicated by the claims that follow.

## Claims

1. A transport climate control system configured to provide a first temperature for cooling a first conditioned space and a second temperature for cooling a second conditioned space, the transport climate control system comprising:
a first climate control system including a first compressor, a first condenser, a first expansion device, and a primary heat exchanger that is configured to thermally communicate with a coolant loop,
a secondary climate control system including a second compressor, a cascaded heat exchanger, a second expansion device, and an evaporator; and
the coolant loop having a coolant,
wherein the coolant loop is configured to thermally communicate with the primary heat exchanger, and wherein the coolant loop is further configured to thermally communicate with one or more of the cascaded heat exchanger and the second conditioned space.

2. The transport climate control system of claim 1, wherein the secondary climate control system is configured to thermally communicate with the first conditioned space for cooling to the first temperature when the coolant loop thermally communicates with the cascaded heat exchanger.

3. The transport climate control system of any one of claims 1 and 2, wherein the coolant loop comprises a heat exchanger provided in the second conditioned space for cooling to the second temperature when the coolant loop thermally communicates with the second conditioned space.

4. The transport climate control system of any one of claims 1-3, wherein the coolant loop comprises a control valve for controlling a flow of the coolant to the one or more of the cascaded heat exchanger and the second conditioned space, and optionally
wherein the control valve is configured to divide the flow of the coolant to the cascaded heat exchanger and the second conditioned space.

5. The transport climate control system of any one of claims 1-4, wherein the coolant loop includes a cold side that is configured to cool one or more components of a transport unit by heat exchange with the coolant and a hot side that is configured to heat one or more components of the transport unit by heat exchange with the coolant, and optionally
wherein the one or more components of the transport unit include batteries for heating and/or cooling.

6. The transport climate control system of 5, wherein the coolant loop comprises one or more control valves for controlling a flow of the coolant to the one or more components of the transport unit.

7. The transport climate control system of any one of claims 1-6, wherein the coolant loop comprises a receiver for receiving the coolant and a pump for circulating the coolant in the coolant loop.

8. The transport climate control system of any one of claims 1-7, wherein the second temperature is at or between at or about 1 and 5 degrees Celsius and the first temperature is at or between 0 and -70 degrees Celsius.

9. The transport climate control system of any one of claims 1-8, wherein the first climate control system includes a second coolant loop having a second coolant and configured to thermally communicate with the first condenser and a second heat exchanger for cooling the second coolant, and optionally
wherein the second heat exchanger is a coolant-to-air heat exchanger in communication with an external environment.

10. The transport climate control system of any one of claims 1-9, wherein the first condenser is air cooled.

11. The transport climate control system of claim 9, wherein the second coolant is at least one of: ethylene glycol, propylene glycol, water, and a brine solution.

12. The transport climate control system of any one of claims 1-11, wherein the coolant is at least one of: ethylene glycol, propylene glycol, water, and a brine solution.

13. The transport climate control system of any one of claims 1-12, wherein a refrigerant in the first climate control system is a hydrocarbon based refrigerant, chlorinated and/or fluorinated based refrigerants, or a blend thereof.

14. The transport climate control system of any one of claims 1-13, wherein a refrigerant in the second climate control system is carbon dioxide.

15. A method of providing a first conditioned space at a first temperature and providing a second conditioned space at a second temperature, the method comprising:
cooling the first conditioned space to the first temperature using a second climate control system that includes a second compressor, a cascaded heat exchanger, a second expansion device, and an evaporator;
circulating a coolant through a hybrid coolant loop that is in thermal communication with at least a primary heat exchanger, the cascaded heat exchanger, and the second conditioned space;
cooling the coolant circulating through the hybrid coolant loop using a first climate control system including a first compressor, a first condenser, a first expansion device, and the primary heat exchanger that is configured to thermally communicate with the hybrid coolant loop; and
controlling a flow of the coolant to one or more of the cascaded heat exchanger or the second conditioned space, wherein the second conditioned space is cooled to the second temperature via thermal communication of the coolant and the second conditioned space.
